# EUROPÄISCHE PATENTSCHRIFT

(11) **EP 2 551 977 B1**
(45) Veröffentlichungstag und Bekanntmachung des Hinweises auf die Patenterteilung: **20.04.2016**
(21) Anmeldenummer: 12004955.6
(22) Anmeldetag: 03.07.2012
(51) Int. Cl.: H02G 3/10, H02G 3/12

(54) **Geräteträger mit Schnappverschluss für die Montage eines Elektroinstallationsgerätes an einen Leitungsführungskanal**
Device holder with latch for fitting an electro-installation device to a line guidance channel
Porte-outils avec fermeture à déclic pour le montage d'un appareil d'installation électronique sur un canal de guidage de conduites.

(30) Priorität: 27.07.2011 DE 202011103720 U
(43) Veröffentlichungstag der Anmeldung: 30.01.2013
(73) Patentinhaber: Tehalit GmbH, 67716 Heltersberg (DE)
(72) Erfinder: Eberle, Patrick, 66292 Riegelsberg (DE); Speiser, Matthias, 67718 Schmalenberg (DE)
(74) Vertreter: Ziegler, Stefan Michael

(56) Entgegenhaltungen:
- EP-A1- 1 094 579
- DE-A1- 10 307 353
- DE-U1- 8 810 746
- DE-U1-202006 006 418
- US-A1- 2004 014 340

## Beschreibung

Die vorliegende Erfindung betrifft einen Geräteträger für die Montage eines Elektroinstallationsgerätes an einen Leitungsführungskanal.

Geräteträger dienen der Aufnahme eines Elektroinstallationsgerätes und werden an einen Leitungsführungskanal, beispielsweise einen Sockelleistenkanal, montiert. Solche Geräteträger sind beispielsweise in der DE 202 13 032 U1, DE 201 20 026 U1 oder EP 1 320 161 A1 beschrieben. Elektroinstallationsgeräte werden an den Geräteträgern unterschiedlich befestigt. Beispielsweise kann die Befestigung über Dome oder durch Verschraubung erfolgen. Ferner sind auch Rastverschlüsse zur Befestigung des Elektroinstallationsgerätes an den Geräteträger bekannt.

In der EP 1 394 916 A1 wird ein Geräteträger für Sockelleistenkanäle beschrieben, der eine Bodenplatte mit Befestigungsöffnungen und Rasthaken für eine Schnappbefestigung eines Elektroinstallationsgerätes besitzt. Jeder Rasthaken ist an einen Biegearm angeformt. Die Biegearme sind wiederum an der Bodenplatte ausgebildet und radial orientiert. Dadurch sitzt das Elektroinstallationsgeräte umso fester in den Rasthaken, je höher die Abzugskraft am Elektroinstallationsgerät ist. EP 1 094 579 zeigt ein ähnliches Beispiel in dem ein Geräteträger mit einem verrastbaren Deckel versehen werden kann.

In der DE 20 2009 009 353 U1 wird ein selbsttragender Geräteträger für die Montage von Elektroinstallationsgeräten in Leitungsführungskanälen beschrieben. Der Geräteträger besteht aus einem Basisteil, bestehend aus einem Halterahmen und Klemmfüßen zur Aufnahme und Befestigung eines oder mehrerer Elektroinstallationsgeräte. Eine Schürze mit Rastelementen dient zur Befestigung des Basisteils an einem Kanalunterteil eines Leitungsführungskanals.

Bei vielen bekannten Geräteträgerlösungen ist die Montage recht aufwändig oder es ist Werkzeug für die Anbringung und Befestigung des Elektroinstallationsgerätes an dem Geräteträger erforderlich. Oftmals muss das Elektroinstallationsgerät zusätzlich verschraubt werden, um einen festen Halt an dem Geräteträger sicherzustellen. Dies ist unbefriedigend.

Vor diesem Hintergrund ist es Aufgabe der vorliegenden Erfindung, einen verbesserten Geräteträger anzugeben, der eine erleichterte Montage ohne Werkzeug ermöglicht.

Diese Aufgabe wird gelöst durch einen Geräteträger mit den Merkmalen des Anspruchs 1.

Der erfindungsgemäße, verbesserte Geräteträger ermöglicht die Montage eines Elektroinstallationsgerätes über einen sogenannten "Schnappverschluss", bei dem das Elektroinstallationsgerät oder ein Montageteil davon über zwei sich gegenüber liegende, elastische Klemmarme an dem Träger befestigt werden. Bei dem Montageteil kann es sich beispielsweise um einen Träger, einen Rahmen oder ein Gehäuse zur Aufnahme des Elektroinstallationsgerätes handeln.

Dabei gibt es zwei verschiedene Einbauzustände: beim Montagezustand wird das Elektroinstallationsgerät zunächst in die entsprechende Position des Geräteträgers gebracht, auf einer Seite in einen Führungsschlitz eines Montageprofils eingelegt und dadurch an einer Seite von einem Klemmarm gehalten. In diesem Montagezustand hat der Monteur beide Hände frei und kann durch einfaches Andrücken des Elektrogerätes bzw. des Montageteils davon den endgültigen Arretierungszustand erreichen. Für die Fixierung werden beiden Klemmarme aufgrund der nach innen wirkenden Spannkraft nach innen gedrückt, wodurch das Elektroinstallationsgerät bzw. Montageteil gehalten wird.

Der erfindungsgemäße Geräteträger umfasst in seiner Grundform ein Basisteil, bestehend aus einem Boden, Seitenteilen und Montageelementen zur Aufnahme des Elektroinstallationsgerätes. Der Geräteträger umfasst ferner wenigstens zwei an dem Basisteil ausgebildete seitliche, sich gegenüberliegende elastische Klemmarme zur Befestigung des Elektroinstallationsgerätes. Die Klemmarme sind zur Montage des Elektroinstallationsgerätes im Montagezustand nach außen entgegen der nach innen gerichteten Spannkraft spannbar, "innen" bedeutet in diesem Fall zum Zentrum des Basisteils gerichtet; "außen" bedeutet entgegengerichtet, d.h. vom Zentrum weg. Am Kopfende der Klemmarme ist ein Führungssteg sowie eine darüber angeordnete parallel zum Führungssteg verlaufende Klemmleiste angeordnet. Führungssteg und Klemmleiste bilden einen Führungsschlitz, in dem das Elektroinstallationsgerät oder ein Montageteil davon einführbar ist. Die im Montagezustand nach außen vorgespannten Klemmarme sind zur Überführung in den Arretierungszustand lösbar. Infolge der nach innen gerichteten Spannkraft werden die Klemmarme zusammengedrückt und das Elektroinstallationsgerät bzw. das Montageteil gehalten.

Der erfindungsgemäße Geräteträger bietet die Möglichkeit einer gegenüber dem Stand der Technik schnelleren Montage von Elektroinstallationsgeräten entlang eines Leitungsführungskanals, insbesondere eines Sockelleistenkanals. Auf diese Weise können in kurzer Zeit schnell und effizient ganze Räume eines Gebäudes mit Elektroinstallationsgeräten ausgerüstet werden, wobei der Montageaufwand erheblich verringert ist, was die Kosten schließlich senkt.

Für die Montage des Elektroinstallationsgerätes werden die beiden elastischen Klemmarme zunächst nach außen gedrückt (d.h. voneinander weg gedrückt) und auf diese Weise vorgespannt. Das Elektroinstallationsgerät oder ein Montageteil davon kann sodann von einer Seite in den Führungsschlitz eingelegt werden. Dies entspricht dem Montagezustand. Um das Elektroinstallationsgerät bzw. das Montageteil davon zu fixieren, werden die entgegengerichteten Klemmarme anschließend nach innen zur Basisteilmitte gedrückt, wodurch das Elektroinstallationsgerät infolge der Spannkraft im Arretierungszustand festgehalten wird.

Um die Klemmarme im Montagezustand vorgespannt zu halten, ist an dem Führungssteg des Klemmarms vorzugsweise ein Montageprofil ausgebildet. Dieses besteht bevorzugt aus wenigstens einem am Führungssteg ausgebildeten seitlichen Haltehaken, der im Montagezustand der vorgespannten Klemmarme in einen am Kopfende eines Montageelementes ausgeformten Schlitz greift.

Vorzugsweise sind die Montageelemente quadratisch oder rechteckig zueinander als einzelne, separate Elemente am Basisteil angeordnet. Jeder Klemmarm befindet sich vorzugsweise zwischen zwei Montageelementen. Beide Klemmarme sind gegenüberliegend zueinander angeordnet.

Vorzugsweise ist bei einer Ausführungsform an dem Montageelement zusätzlich eine Gleitnase ausgebildet, über die der Rasthaken bei der Überführung von dem Montagezustand in den Arretierzustand gleitet. Im Montagezustand sorgt die Gleitnase dafür, dass der jeweilige Klemmarm in vorgespanntem Zustand auseinander gehalten wird. Um das Elektroinstallationsgerät zu fixieren, werden die beiden Klemmarme zusammengedrückt, wodurch der Rasthaken über die Gleitnase in den Arretierungszustand gedrückt wird. In einer Ausführungsform besitzt die Klemmleiste zusätzlich seitliche Klemmbacken zum Halt des Elektroinstallationsgerätes oder des Montageteils. Das Zusammendrücken der Klemmarme kann auch dadurch erfolgen, dass das Elektroinstallationsgerät oder das Montageteil davon von oben angedrückt wird.

Für die Montage an einem Sockelleistenkanal ist an dem Basisteil am Fußende zusätzlich eine Schürze ausgebildet, welche an einem Kanalunterteil eines Leitungsführungskanals über entsprechende Befestigungselemente befestigbar ist.

Nach erfolgtem Einbau des Elektroinstallationsgerätes wird der Geräteträger von einem Gehäuse umhaust.

Der erfindungsgemäße Geräteträger wird in den nachfolgenden Zeichnungen näher erläutert.

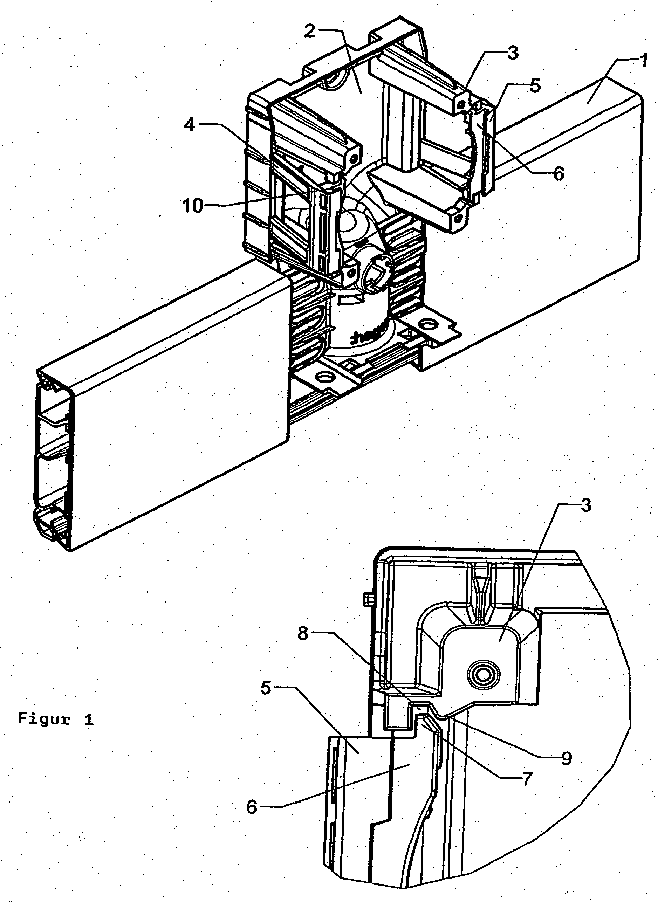

In den Fig. 1 bis 4 sind die verschiedenen Installationszustände des erfindungsgemäßen Geräteträgers gezeigt.

In Fig. 1 ist der Montagezustand gezeigt. Der erfindungsgemäße Geräteträger besteht aus einem Basisteil 2, bestehend aus einem Boden und Seitenwänden. Das Basisteil 2 wird in der gezeigten Ausführungsform über eine Schürze an einem Kanalunterteil eines Leitungsführungskanals 1 befestigt. An dem Boden das Basisteils 2 sind Montageelemente 3 angeordnet, die zur Aufnahme eines Elektroinstallationsgerätes dienen. Die beiden Klemmarme 4 sind im vorgespannten Zustand gezeigt. Hierbei werden die beiden Klemmarme 4 nach außen, d.h. voneinander weg gespreizt. Jeder Klemmarm 4 ist zwischen zwei Montageelementen 3 angeordnet. Das Fußende des Klemmarms 4 ist mit dem Basisteil 2 verbunden. Das Kopfende jedes Klemmarmes 4 besitzt einen Führungssteg 6 sowie eine darüber angeordnete parallel zum Führungssteg 6 verlaufende Klemmleiste 5. Der Führungssteg 6 und die Klemmleiste 5 bilden einen Führungsschlitz 10, in den das Elektroinstallationsgerät oder ein Montageteil 11 davon zum Halt einsetzbar ist.

Um die beiden Klemmarme 4 im vorgespannten Montagezustand zu halten, ist am Führungssteg 6 zusätzlich ein Haltehaken 7 angeformt, der im Montagezustand der vorgespannten Klemmarme 4 in einen am Kopfende des Montageelementes 3 ausgeformten Schlitz 8 greift. Durch die Vorspannung der Klemmarme 4 hat der Monteur beide Hände frei, das Elektroinstallationsgerät bzw. das Montageteil davon in den Geräteträger einzusetzen und in die gewünschte Position zu bringen. Um das Elektroinstallationsgerät endgültig zu fixieren, müssen die beiden auseinander gespreizten Klemmarme 4 wieder zusammengebracht werden. Hierzu werden die Klemmarme 4 über eine am Montageelement 3 ausgebildete Gleitnase 9 gedrückt, wodurch die beiden Klemmarme 4 infolge der nach innen gerichteten Spannkraft zur Basisteilmitte gedrückt werden.

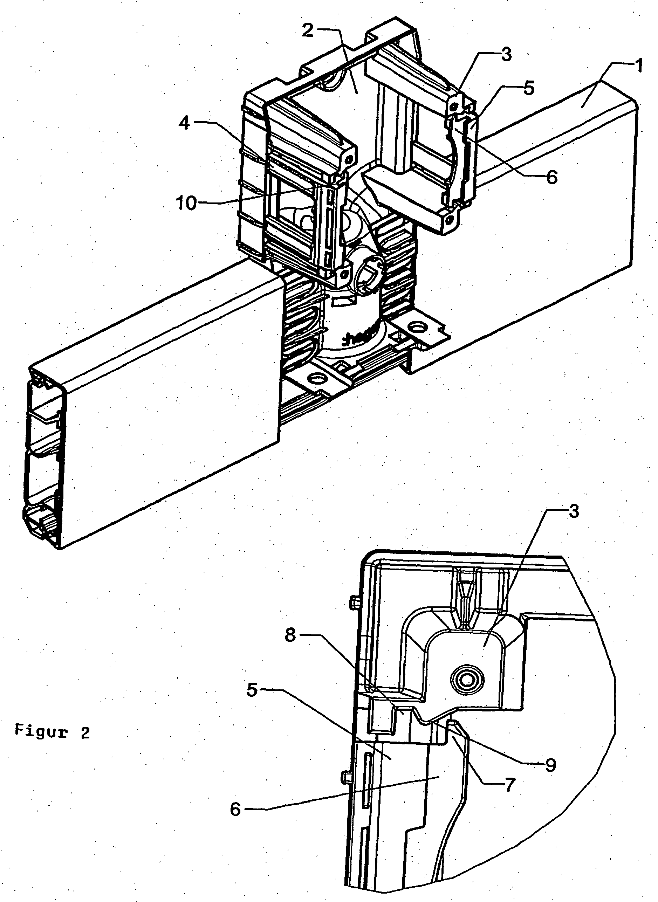

In Fig. 2 ist der Arretierungszustand gezeigt. Die beiden Klemmarme 4 werden infolge der Spannkraft nach innen gedrückt zur Basisteilmitte und gehalten. Der am Führungssteg ausgebildete Rasthaken 7 wurde von dem Schlitz 8 über eine Außenkante der Gleitnase 9 gedrückt.

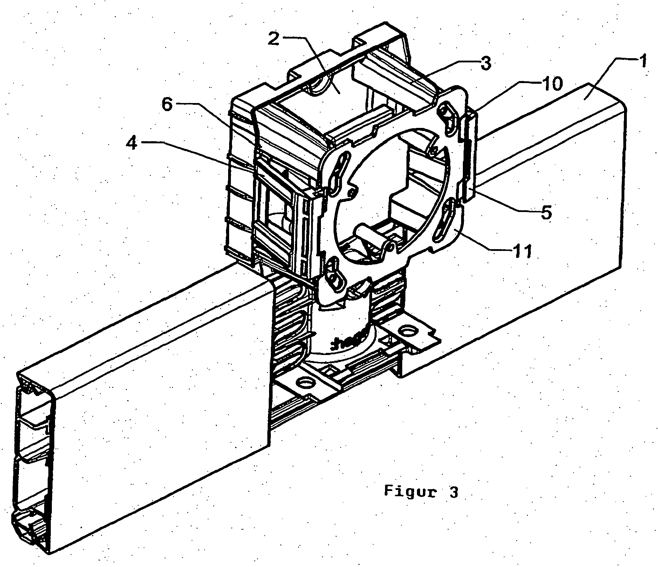

In Fig. 3 ist der Einbau eines Montageteils 11 an dem erfindungsgemäßen Geräteträger gezeigt. Das Montageteil 11 ist auf der gezeigten rechten Seite in dem von der Klemmleiste 5 sowie dem Führungssteg 6 gebildeten Führungsschlitz 10 eingesetzt. Um das Montageteil 11 zu fixieren, wird es einfach entsprechend der Abbildung von oben nach unten gedrückt, wodurch die beiden Klemmarme 4 freigesetzt und durch die anliegende Spannkraft nach innen gedrückt werden. Die beiden Klemmarme 4 sorgen somit für den Halt des Montageteils 11 und damit des Elektroinstallationsgerätes.

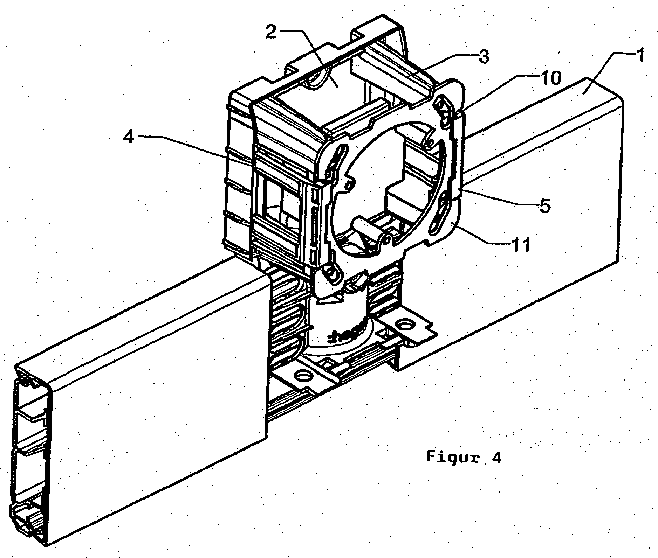

In Fig. 4 ist ein weiterer Arretierungszustand gezeigt. Das Montageteil 11 ist beidseitig in den Führungsschlitz 10 eingesetzt und die beiden Klemmarme 4 sorgen für die Fixierung. Falls erwünscht, kann das Montageteil 11 bzw. das Elektroinstallationsgerät zusätzlich über Befestigungsmittel an den Montageelementen 3 befestigt werden.

## Patentansprüche

1. Geräteträger für die Montage eines Elektroinstallationsgerätes an einen Leitungsführungskanal, umfassend:
- ein Basisteil (2), bestehend aus einem Boden, Seitenteilen und Montageelementen (3) zur Aufnahme des Elektroinstallationsgerätes,
- wenigstens zwei an dem Basisteil (2) ausgebildete seitliche, sich gegenüberliegende elastische Klemmarme (4) zur Befestigung des Elektroinstallationsgerätes, **dadurch gekennzeichnet, dass** die Klemmarme (4) zur Montage des Elektroinstallationsgerätes im Montagezustand nach außen entgegen der nach innen zur Basismitte gerichteten Spannkraft spannbar sind und am Kopfende der Klemmarme (4) jeweils ein Führungssteg (6) sowie eine darüber angeordnete parallel zum Führungssteg (6) verlaufende Klemmleiste (5) angeordnet ist, wobei der Führungssteg (6) und die Klemmleiste (5) einen Führungsschlitz (10) bilden, in dem das Elektroinstallationsgerät oder ein Montageteil davon einsetzbar ist, wobei die im Montagezustand vorgespannten Klemmarme (4) zur Überführung in den Arretierungszustand nach innen gedrückt werden, wodurch infolge der nach innen zur Basismitte gerichteten Spannkraft das Elektroinstallationsgerät oder das Montageteil gehalten wird, wobei am Führungssteg (6) des Klemmarmes (4) ein Montageprofil ausgebildet ist, bestehend aus wenigstens einen am Führungssteg (6) ausgebildeten seitlichen Haltehaken (7), der im Montagezustand der vorgespannten Klemmarme (4) in einen am Kopfende eines Montageelementes (3) ausgeformten Schlitz (8) greift und wobei an dem Montageelement (3) zusätzlich eine Gleitnase (9) ausgebildet ist.

2. Geräteträger nach Anspruch 1, **dadurch gekennzeichnet, dass** sich die wenigstens zwei separate Klemmarme (4) zwischen quadratisch oder rechteckig zueinander am Basisteil (2) angeordneten Montageelementen (3) befinden.

3. Geräteträger nach Anspruch 1 oder 2, **dadurch gekennzeichnet, dass** die Klemmleiste (5) seitliche Klemmbacken zum Halt des Elektroinstallationsgerätes oder des Montageteils davon besitzt.

4. Geräteträger nach einem der Ansprüche 1 bis 3, **dadurch gekennzeichnet, dass** an dem Basisteil (2) zusätzlich eine Schürze zur Befestigung an ein Kanalunterteil (1) ausgebildet ist.

## Claims

1. Device support for mounting an electrical installation device on a line guidance duct, comprising:
- a base part (2), comprising a base, side parts and mounting elements (3), for receiving the electrical installation device,
- at least two lateral, opposing and elastic clamping arms (4), which are formed on the base part (2), for fastening the electrical installation device, **characterized in that** the clamping arms (4), for mounting the electrical installation device in the mounted state, can be tensioned outwards against the tensioning force which is directed inwards in the direction of the centre of the base, and a guide web (6) and also a clamping strip (5), which is arranged above the said guide web and runs parallel to the guide web (6), are arranged at the head end of each of the clamping arms (4), wherein the guide web (6) and the clamping strip (5) form a guide slot (10) into which the electrical installation device or a mounting part of the said electrical installation device can be inserted, wherein the clamping arms (4), which are pretensioned in the mounted state, are pressed inwards in order to change over to the locking state, as a result of which the electrical installation device or the mounting part is held on account of the tensioning force which is directed inwards in the direction of the centre of the base, wherein a mounting profile is formed on the guide web (6) of the clamping arm (4), the said mounting profile comprising at least one lateral retaining hook (7) which is formed on the guide web (6) and, in the mounted state of the pretensioned clamping arms (4), engages into a slot (8) which is formed at the head end of a mounting element (3), and wherein a sliding lug (9) is additionally formed on the mounting element (3).

2. Device support according to Claim 1, **characterized in that** the at least two separate clamping arms (4) are located between mounting elements (3) which are arranged on the base part (2) so as to form a square or rectangle.

3. Device support according to Claim 1 or 2, **characterized in that** the clamping strip (5) has lateral clamping jaws for retaining the electrical installation device or the mounting part of the said electrical installation device.

4. Device support according to one of Claims 1 to 3, **characterized in that** a skirt for fastening to a duct lower part (1) is additionally formed on the base part (2).

## Revendications

1. Support d'appareil pour le montage d'un appareil d'installation électrique sur un caniveau de câblage, comprenant :
- une partie de base (2) pour recevoir l'appareil d'installation électrique, constituée d'un fond, de parties latérales et d'éléments de montage (3),
- au moins deux bras de serrage élastiques latéraux (4) en vis-à-vis, formés sur la partie de base (2), pour la fixation de l'appareil d'installation électrique,
**caractérisé en ce que** les bras de serrage (4) peuvent, pour le montage de l'appareil d'installation électrique, dans l'état de montage, être contraints vers l'extérieur à l'encontre de la force de serrage dirigée vers l'intérieur en direction du milieu de la base, et une nervure de guidage (6) ainsi qu'une barrette de serrage (5) disposée au-dessus en s'étendant parallèlement à la nervure de guidage (6) sont chaque fois disposées à l'extrémité de tête des bras de serrage (4), sachant que la nervure de guidage (6) et la barrette de serrage (5) forment une fente de guidage (10) dans laquelle peut être inséré l'appareil d'installation électrique ou une partie de montage de ce dernier, sachant que les bras de serrage (4) précontraints dans l'état de montage sont poussés vers l'intérieur pour le transfert dans l'état de blocage, de sorte que l'appareil d'installation électrique ou la partie de montage est maintenu(e) par suite de la force de serrage dirigée vers l'intérieur en direction du milieu de la base, sachant qu'un profil de montage est formé sur la nervure de guidage (6) du bras de serrage (4), profil qui est constitué d'au moins un crochet de retenue latéral (7) formé sur la nervure de guidage (6) qui, dans l'état de montage des bras de serrage précontraints (4), s'engage dans une fente (8) formée à l'extrémité de tête d'un élément de montage (3), et sachant qu'un ergot de glissement (9) est en outre formé sur l'élément de montage (3).

2. Support d'appareil selon la revendication 1, **caractérisé en ce que** les au moins deux bras de serrage séparés (4) se trouvent entre des éléments de montage (3) disposés en carré ou en rectangle les uns par rapport aux autres sur la partie de base (2).

3. Support d'appareil selon la revendication 1 ou 2, **caractérisé en ce que** la barrette de serrage (5) possède des mors de serrage latéraux pour maintenir l'appareil d'installation électrique ou la partie de montage de ce dernier.

4. Support d'appareil selon l'une des revendications 1 à 3, **caractérisé en ce qu'**une jupe est en outre formée sur la partie de base (2) pour la fixation sur une partie inférieure de caniveau (1).
